# EUROPEAN PATENT SPECIFICATION

(11) **EP 2 067 662 B1**
(45) Date of publication and mention of the grant of the patent: **07.07.2010**
(21) Application number: 08021260.8
(22) Date of filing: 08.12.2008
(51) Int. Cl.: B60R 1/078

(54) **Towing mirror-holder**
Spiegelhalterung für Zugfahrzeuge
Support de miroir pour véhicules tracteurs

(30) Priority: 08.12.2007 DK 200700296 U
(43) Date of publication of application: 10.06.2009
(73) Proprietor: Brunsgaard ApS, 7100 Vejle (DK)
(72) Inventor: Brunsgaard, Niels, 7100 Vejle (DK)
(74) Representative: Schmidt, Jens Joergen

(56) References cited:
- CH-A- 496 565
- DE-U1- 8 405 450
- DE-U1- 8 802 618
- DE-U1- 9 014 343

## Description

### Field of the invention

The present invention relates to a towing mirror-holder suitable for fitting onto a side-view mirror of a car.

### Description of the related art

The traditional way of fitting a towing mirror-holder onto a car side-view mirror is e.g. by using a holder disclosed in German Utility model application DE9014343U. One problem related hereto is that side-view mirrors of various car-models have various physical dimensions and it is therefore necessary to provide a specific towing mirror-holder with specific physical dimensions to each car-model and its related side-view mirror.

This means that if e.g. a camper changes car-model, the camper would also be forced to change the towing mirror-holder too.

It is the object of the present invention to provide a towing mirror-holder without the above mentioned disadvantages and furthermore provide a towing mirror-holder that is easily fitted onto a side-view mirror of a car.

### The invention

The present invention relates to a towing mirror-holder suitable for fitting onto a side-view mirror of a car wherein said towing mirror-holder comprises a main arm and two holder-arms for engaging the side-view mirror and holding the towing mirror-holder onto it. Such a towing mirror-holder is described in document DE-U1-8405450 which discloses the preamble of claim 1.

By allowing the two holder-arms to be displaceable in relation to each other and in relation to the main-arm it is ensured that the towing mirror-holder can be adjusted, fitted and mounted on various types of car side-view mirrors and a solution of the problems of prior art is achieved.

In one aspect of the invention, said main arm comprises a through-hole for said holder-arms and wherein the holder-arms can be locked to the main arm with a pointed screw suitable for being screwed into the main arm. By leading parts of the holder-arms though the said through-hole in the main arm and locking the holder-arms in position with a pointed screw, a secure and stable locking of the holder-arms in a desired position is ensured and thereby a desired fitting to the side-view mirror of a car. Furthermore it is ensured that by un-locking the pointed screw the holder-arms can be loosen and the towing mirror-holder can detached and/or the holder-arms can be adjusted to a new position and locked again.

In another aspect of the invention, said holder-arms can be displaced in relation to each other by allowing parts of the holder-arms to pass each other in parallel. Hereby a simple construction of the towing mirror-holder in general and of the holder-arms specific together with the attachment means for locking the holder-arms in a desired position is ensured.

In yet another aspect of the invention, at least one of the holder-arms can be rotated around an axis extending axial along that part of said at least one holder-arm that passes through said through-hole of the main arm. Hereby it is ensured that further flexibility in relation to adjusting and positioning of the towing mirror-holder to fit on various side-view mirrors with various dimensions is achieved and that a solution of the problems with prior-art is obtained.

In an even further aspect of the invention, said main arm comprises at least two parts, of which a first part is of a substantially constant cross-section and a second part of a larger cross-section and arranged at a distal end of the first part, the second part being a holder-part suitable for retaining the holder-arms. Hereby it is ensured that a specific part of the main arm can be special dimensioned as to withstand the loads applied to the mirror-holder and loads applied during mounting.

In another aspect of the invention, said holder-arms are locked in position in relation to the main-arm by attachment means. Hereby it is ensured that separate means are dedicated for locking the holder-arms in position in relation to the main arm.

In yet another aspect of the invention, the holder-arms are separately locked in position in relation to the main arm, by separate attachment means. Hereby an easy installation or fitting onto a side-view mirror is ensured, where one holder-arm at a time can be adjusted and locked in position without requiring adjusting of the other holder-arm at the same time.

In a further aspect of the invention, said attachment means 5 comprises at least one screw. Hereby a simple locking mechanism is ensured that does not require complicated and/or specialized tools in order to fit the towing mirror-holder to a side-view mirror of a car.

### Figures

The invention will be described in the following with reference to the figures in which
fig. 1a illustrates schematically one embodiment of the invention as seen from a first side,
fig. 1b illustrates schematically one embodiment of the invention as seen from a second side,
fig. 2a and fig. 2b illustrates schematically in relation to one embodiment of the invention how the holder arms can be positioned in relation to each other,
fig. 3 illustrates schematically for one embodiment of the invention how the invention can be fitted onto a side-view mirror of a car,
fig. 4 illustrates schematically one embodiment of the invention fitted onto a side-view mirror of a car,
fig.5 illustrates for one embodiment of the invention an example of an attachment means for the holder arms to the main arm,
fig. 6a to 6d illustrates for various embodiments of the invention, examples of attachment means to the holder-arms comprising a holder-part,
fig. 7a and fig. 7b illustrates another embodiment of the invention where the attachment means to the holder-arms is composed with a connection block,
fig. 8 illustrates schematically for a further embodiment of the invention the fastening means to the holder-arms as seen from two sides,
fig. 9 illustrates a further embodiment of the invention where each of the holder-arms can be locked separately,
fig. 10 illustrates for an embodiment a design of the attachment means 5,
fig. 11 illustrates a further embodiment of the design of the attachment means 5,
fig. 12a and 12b illustrates an even further embodiment of the design of the attachment means 5,
fig. 13a and 13b illustrates yet another embodiment of the design of the attachment means 5,
fig. 14 illustrates a further embodiment of the attachment means 5 and holder-part 11.

### Detailed description

The present invention relates to a towing mirror-holder suitable to fit onto a car side-view mirror where the mirror-holder is constructed in a way that it flexible can be adjusted to fit onto side-view mirrors of different dimensions. For one embodiment of the invention, said towing mirror-holder is a caravan mirror-holder.

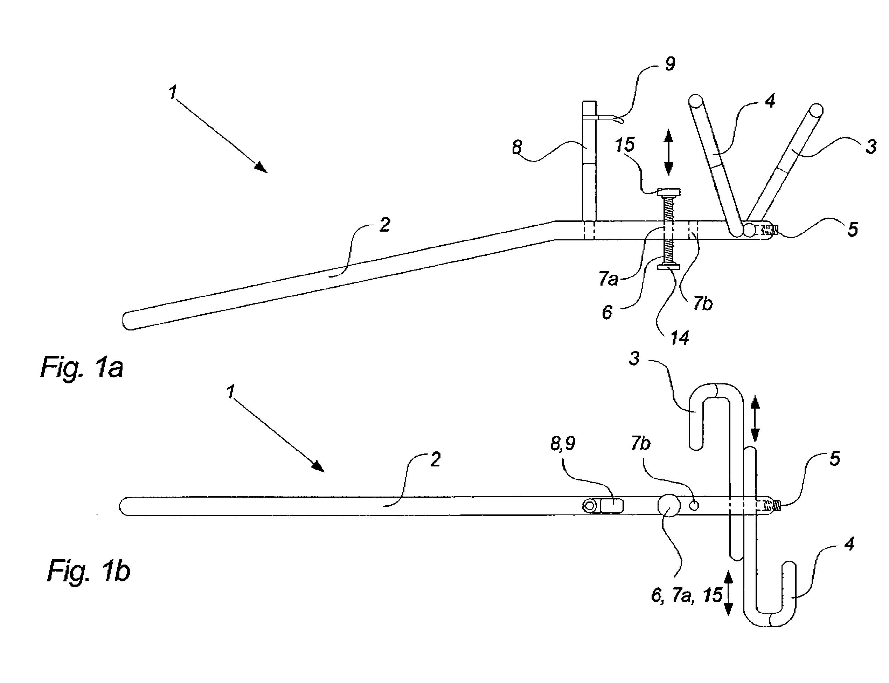

Fig. 1a illustrates schematically one embodiment of the invention as seen from a first side.

The towing mirror-holder 1 comprises in general, of a main arm 2, two holder-arms 3, 4, a first connection part 6, and a second connection part 8, 9.

The holder is composed in a way that the first connection part 6, which comprises a threaded piece, is lead through the main arm 2 via a hole with thread 7a, 7b. The first connection part 6 can thus be adjusted in its longitudinal direction as indicated by arrows on the figure. Furthermore the said first connection part 6 comprises a finger-knob 14 and a pressure part 15. The knob 14 is the part of the connection part 6 that is to be turned when the part must be adjusted in the thread in the longitudinal direction. The pressure part 15 is the part of the connection part 6 that is in contact with the side-view mirror of the car when the towing mirror-holder is fitted.

The second connection part 8, 9 comprises a distance piece 8 and an angle piece 9. The distance piece is fastened to the main arm 2 in a distance from said first connection part 6. The second connection part has the purpose of providing a fastening point for the towing mirror-holder 1 when it is fitted onto a side-view mirror. The angle piece 9 is the part of the connection part that is in contact with the side-view mirror of the car when the towing mirror-holder is fitted.

In addition to this the holder 1 consists of a first and a second holder-arm 3, 4. The holder-arms 3, 4 are constructed in a way that they have a hook-like design and function.

According to various embodiments of the invention, the holder-arms 3, 4 are lead through holes 10 in the main arm2 and when the holder-arms are positioned in the desired position, they can be locked in this position by means of attachment means 5

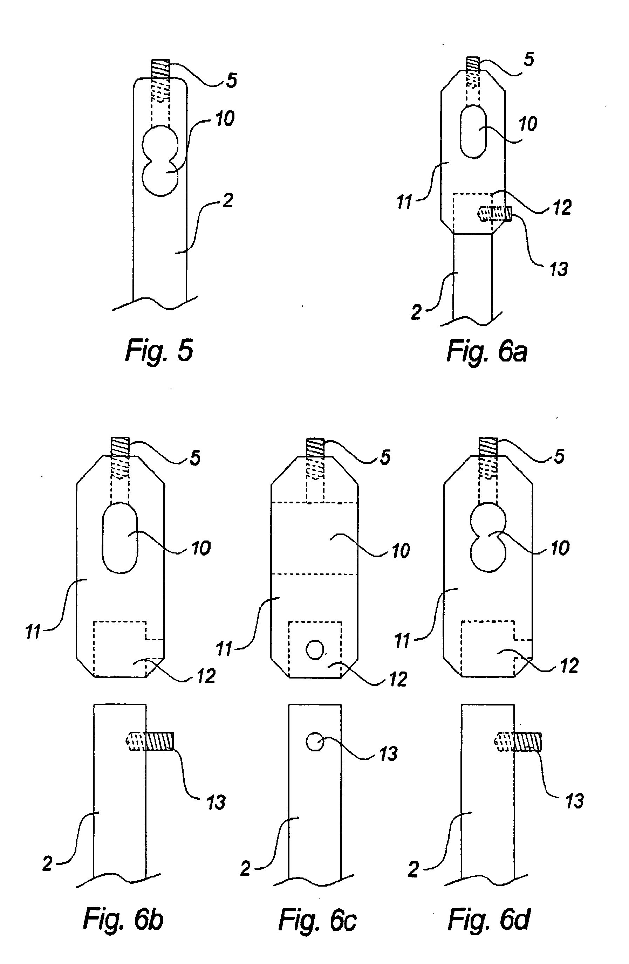

In further embodiments of the invention, the holder-arms are not lead through holes 10 in the main arm, but are lead through or mounted on a holder-part that is assembled with the main arm e.g. as described in fig. 6.

Fig. 1b illustrates schematically one embodiment of the invention as seen from a second side.

From this especially the design of holder-arms 3, 4 can be seen.

Furthermore it is indicated by arrows that the holder-arms 3, 4 can be displaced in a longitudinal direction in relation to each others in such a way that the distance between their ends can be altered.

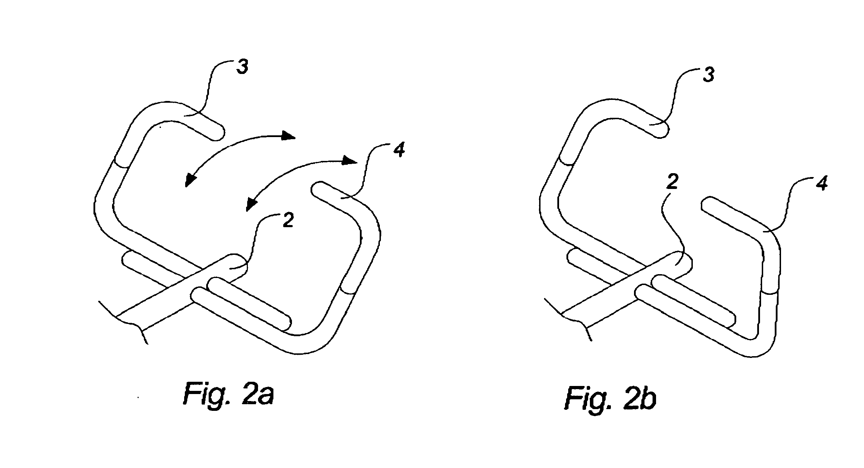

Fig. 2a and fig. 2b illustrates schematically in relation to one embodiment of the invention how the holder arms 3, 4 likewise can be positioned in relation to each other e.g. around an axis through the through-holes 10 in the main-arm 2. This is indicated by arrows on fig. 2a.

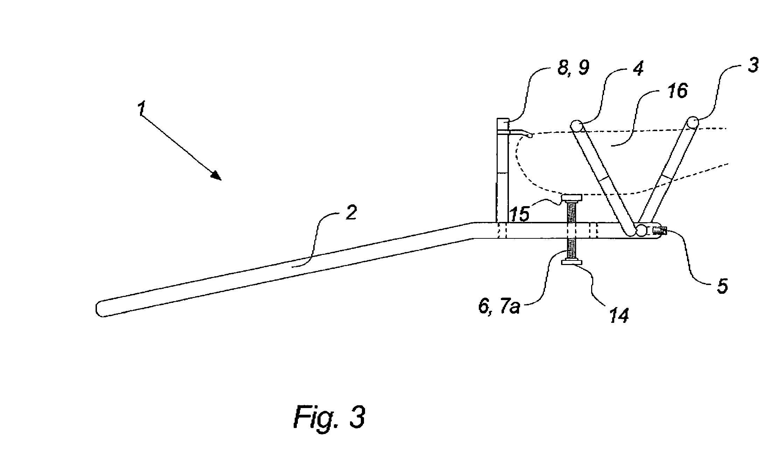

Fig. 3 illustrates schematically for one embodiment of the invention how the invention can be fitted onto a side-view mirror of a car 16.

The towing mirror-holder 1, which is seen from above, is mounted on the side-view mirror 16 which is indicated by the dotted line on the figure. The holder is in contact with the mirror 16 in 4 points - i.e. in relation to the first connection part 6, in relation to the second connection part, and in relation to each of the holder-arms 3, 4.
By adjustment of the first connection part 6 it can be achieved to fasten the mirror-holder at the said points in a way that the first connection part 6 makes contact on the one side of the side-view mirror and the second connection part, first and second holder-arm respectively are making contact on other side of the side-view mirror

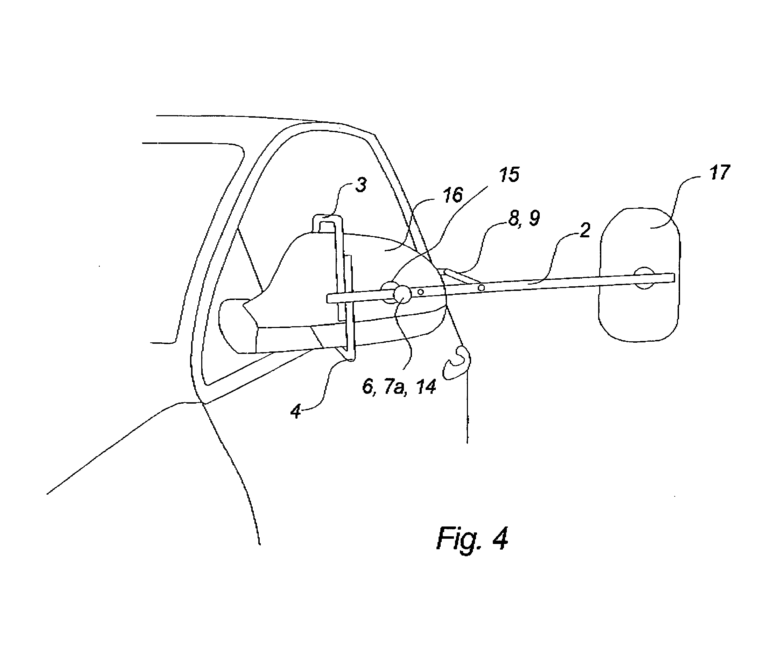

Fig. 4 illustrates schematically one embodiment of the invention fitted onto a side-view mirror of a car. This figure illustrates furthermore a towing mirror 17 mounted distally on the main arm 2.

Fig. 5 illustrates for one embodiment of the invention an example of an attachment means for the holder arms to the main arm.

In relation to this embodiment the holder-arms 3, 4 are passed through through-holes 10 in the main arm 2 and when the arms 3, 4 are positioned in the desired position they can be locked in this position by attachment means 5 e.g. an pointed screw which, when it is screwed towards the holder-arms 3, 4 in the holes 10, are pressing the holder-arms 3, 4 against each other and against the sides of said holes 10. Hereby it is achieved that the holder-arms 3, 4 are locked in the desired position during the fitting of side-view mirror 16.

In a specific embodiment of the invention the main arm 2 is made of a 12 mm aluminium rod and the holder-arms 3, 4 are made of a 8 mm aluminium rod.

In a further embodiment of the invention, said through-hole are carried out by drilling two holes through the main arm 2 and by the holes overlapping e.g. with 0,1 mm.

In another embodiment of the invention, said attachment means 5 is carried out by making a 6 mm threaded hole, axially from the one end of the main arm 2 towards said through-holes 10. In the threaded hole can a 6 mm pointed screw.

Fig. 6a til 6d illustrates for various embodiments of the invention, examples of attachment means to the holder-arms comprising a holder-part

Fig. 6a illustrates an example where the main arm 2 is mounted with a holder-part 11 at the distal end of the arm 2 where the holder-arms are to be fitted during use.

The holder-part 11 comprises, in a similar way as earlier described, through-holes 10 and corresponding attachment means 5. Furthermore the holder-part 11 of a milling to the main arm 12 and a fastening means to the holder-part 13 for fitting and fastening of the two parts.

The holder-part 11 can for various embodiments be made of another material than the main arm 2.

The holder-part can have the advantage to strengthen the material and fastening of the holder-arms 3, 4 to the main arm 2.

In various embodiments the through-holes for the holder arms 10 have different designs. In the illustrated example, the design is oblong with circular ends.

Fig. 6b illustrates the holder-part from a first side.

Fig. 6c illustrates the holder-part from another side.

Fig. 6d illustrates one embodiment of the holder-part 11 where the through-holes of the holder arms 10 are designed after the same directions as illustrated in fig. 5 i.e. as two overlapping holes.

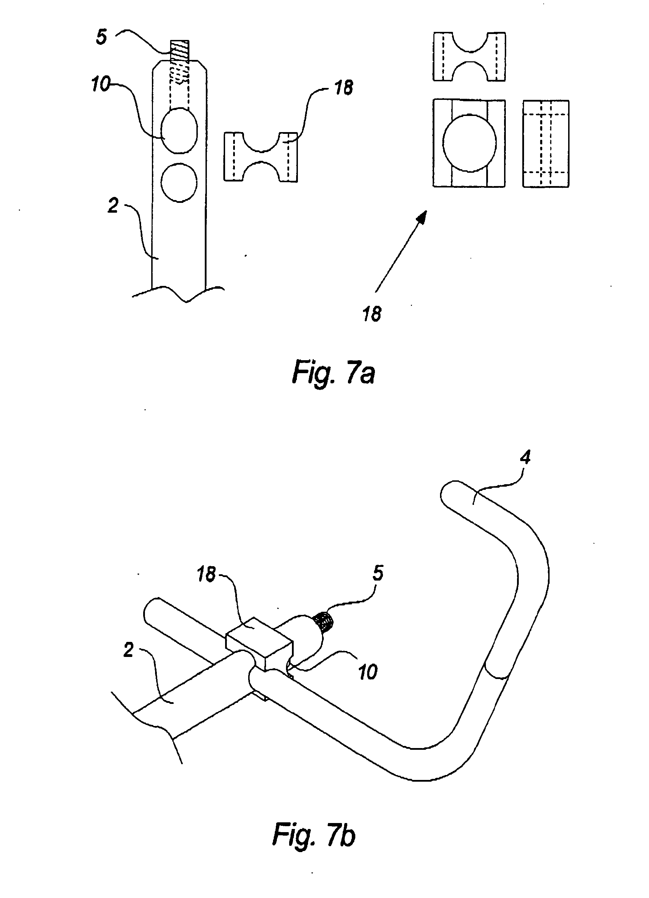

Fig. 7a and fig. 7b illustrates another embodiment of the invention where the attachment means 5 to the holder-arms 3, 4 is composed with a connection block 18.

Fig. 7a illustrates the connection block 18 seen in relation to the main arm 2 and attachment means 5. Furthermore the connection block 18 is illustrated as seen from different side-perspectives.

The block 18 has millings in such a way that it fits over the main arm 2 and that there is room for the holder-arms 3, 4. For this embodiment of the invention the through-holes for the holder-arms 10 does not necessary need to overlap, but can be located with a distance to each other. Tightening the attachment means 5, e.g. a pointed screw, results in a pressure on the first holder-arm 3. This pressure is spread via the connection block 18 to the second holder-arm 4 and the holder-arms are thereby held in the desired position.

Fig. 7b illustrates for one embodiment of the invention, the connection block 18 placed on the main arm 2.

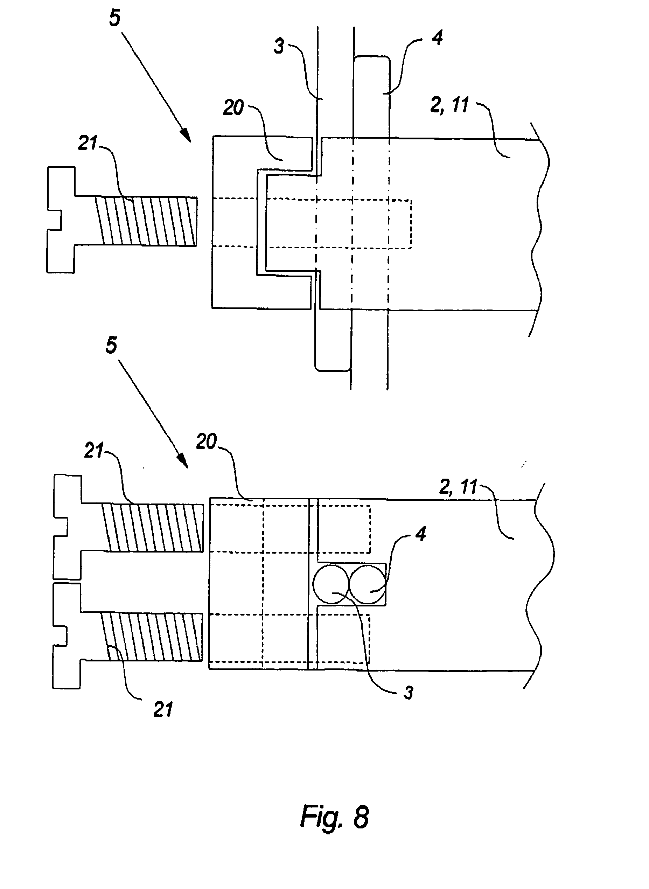

Fig. 8 illustrates schematically for a further embodiment of the invention the fastening means to the holder-arms as seen from two sides.

For this embodiment the holder-arms 3, 4 are located in a groove on the main arm 2. A top-part 20 is locked to the main arm 2 by means of one or more screws 21 as illustrated. By locking the top-part 20, this part presses on the holder-arms 3, 4 located in the groove and they are thereby locked.

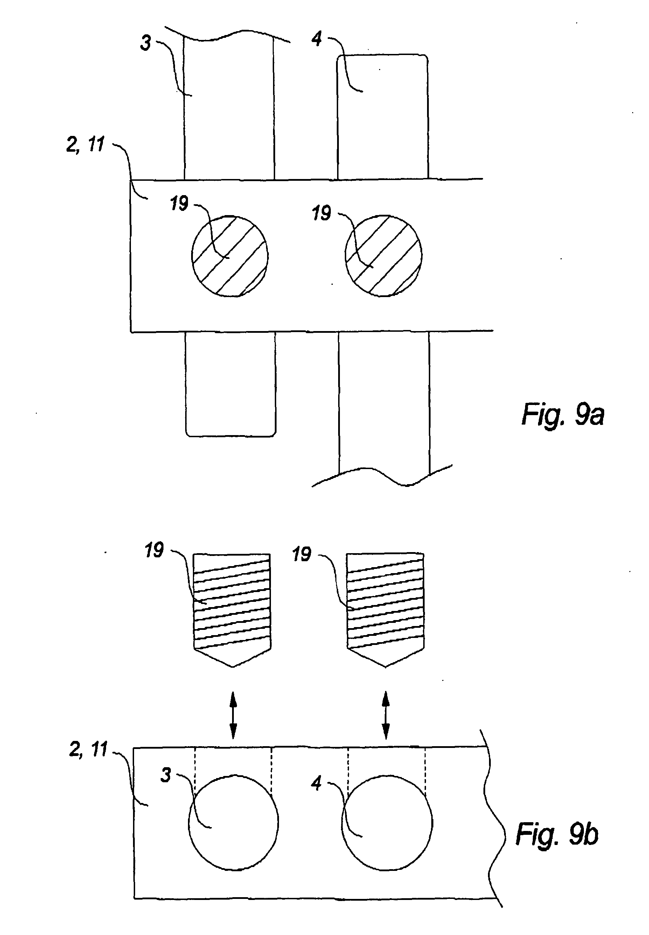

Fig. 9a and 9b illustrates a further embodiment of the invention where each of the holder-arms can be locked separately.

For this embodiment, there is a through-hole in the main arm 2 for each of the holder-arms 3, 4. The holder-arms are locked in the desired positions by tightening of the pointed screws 19.

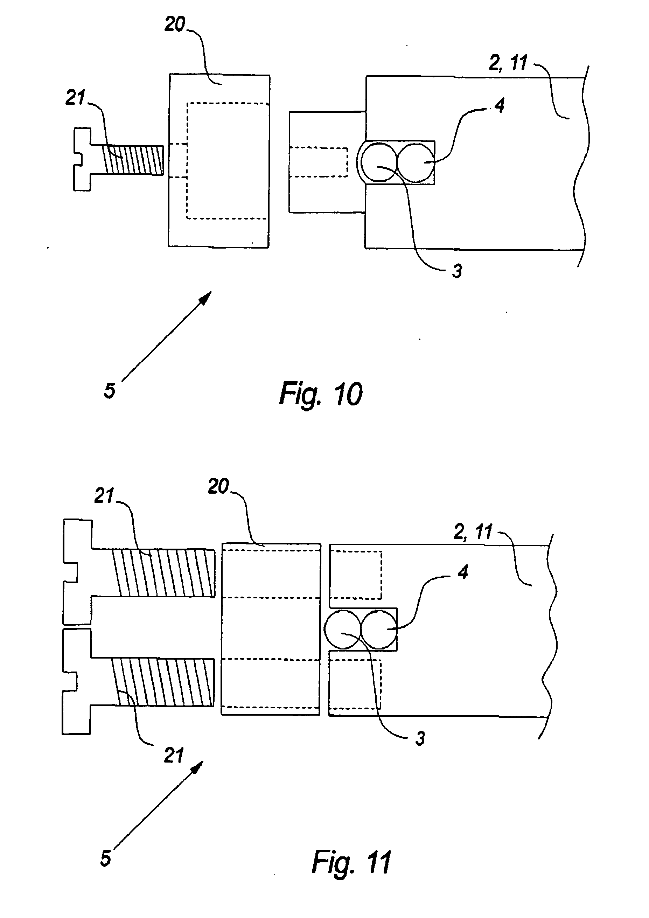

Fig. 10 illustrates for an embodiment a design of the attachment means 5. The holder-arms 3, 4 are positioned in the through-hole 10 of the main arm 2. The distal end of the main arm 2 is milled in a way that it is able to receive a top-part 20 that surrounds the said distal end. The top-part 20 can be attached to the milled distal end e.g. by a screw 21. The through-hole 10 and the milling is overlapping in such a way that holder-arms 3, 4 are extended to the milling and when attaching and tightening the top-part 20 the top-part applies pressure to the holder-parts 3, 4 and they are locked in place in the through-hole 10.

For another embodiment of the invention the design illustrated in fig. 10 can also be applied as design of attachment means 5 on a holder-part 11.

Fig. 11 illustrates a further embodiment of the design of the attachment means 5. The holder-arms 3, 4 are positioned in a milled groove or through-hole 10 at the distal end of the main arm 2. The holder-arms 3, 4 are of dimensions so that they extend out of the said groove. A top-part 20 can be attached to said distal end of the main arm e.g. by screws 21 and when attaching and tightening the top-part 20, this part applies pressure to the holder- parts 3, 4 and they are locked in place in the groove.

For another embodiment of the invention the design illustrated in fig. 11 can also be applied as design of attachment means 5 on a holder-part 11.

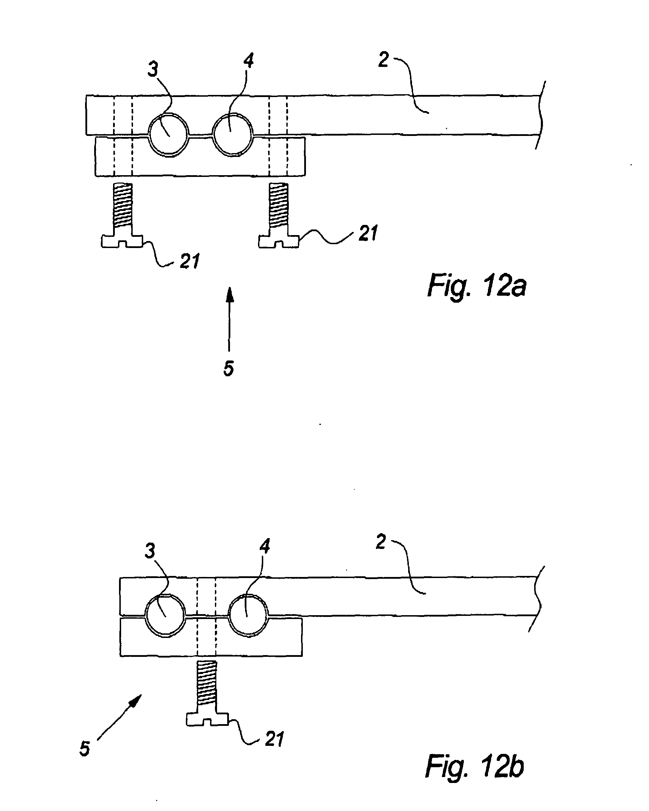

Fig. 12a and 12b illustrates a further embodiment of the design of the attachment means 5. For this embodiment two separate grooves are milled in the main arm 2, fitting the holder-arms 3, 4. A top-part 20 has similar millings and can be attached to the main arm 2 by two screws 21 and when attaching and tightening the top-part 20, this part applies pressure to the holder- parts 3, 4 and they are locked in place in the milling.

For another embodiment of the invention the design illustrated in fig. 12a and 12b can also be applied as design of attachment means 5 on a holder-part 11.

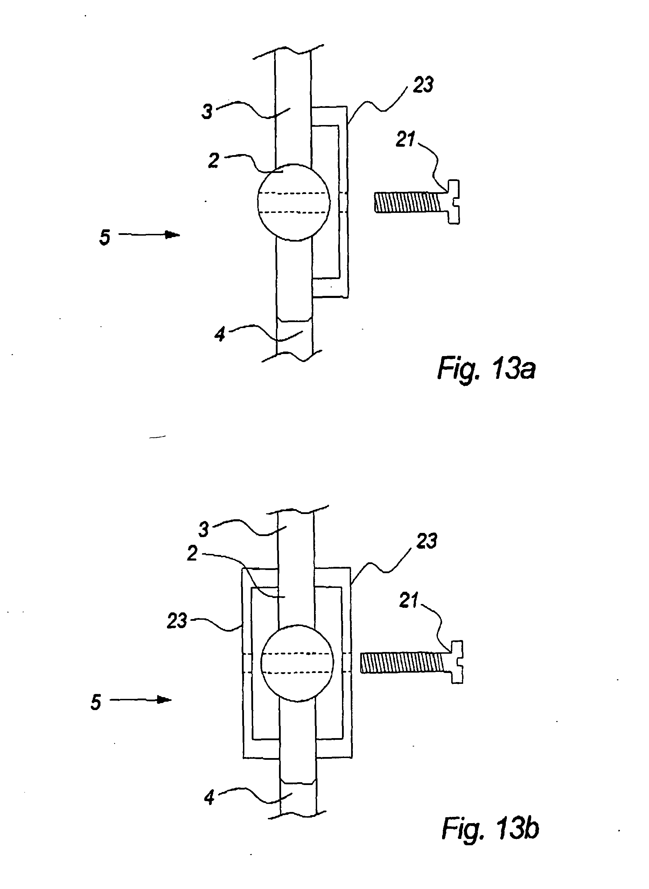

Fig. 13a and 13b illustrates yet another embodiment of the design of the attachment means 5. The holder-arms 3, 4 are positioned in the through-hole 10 at the distal end of the main arm 2. Assembly parts 22 are screwed and tightened to the main arm 2 and are designed to apply pressure to the holder-arms 3, 4 when tightened. Hereby the holder-arms 3, 4 are locked in position.

For another embodiment of the invention the design illustrated in fig. 13a and 13b can also be applied as design of attachment means 5 on a holder-part 11.

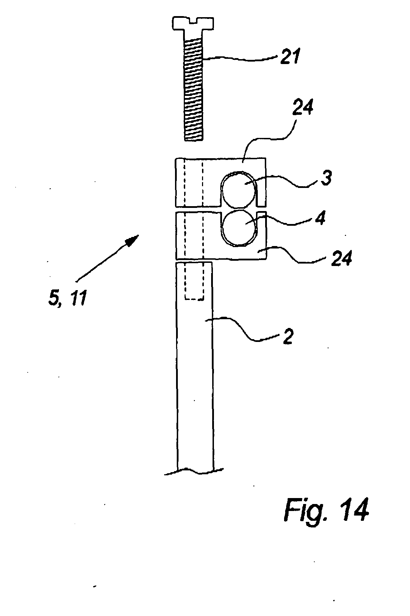

Fig. 14 illustrates a further embodiment of the attachment means 5 and holder-part 11. The holder-part 11 is made of two portions 23 each of the having a milled portion suitable for receiving the holder-arms 3, 4. Furthermore the portions 23 comprise a through-going hole through which a screw 21 is lead to a thread in the distal end of the main arm 2. By tightening the screw 21 the portions 23 are pressing the holder-arms 3, 4 together and they are locked in position. Furthermore the holder-part 11 is attached to the distal end of the main arm 2.

### List

- 1.: Towing mirror-holder
- 2.: Main arm
- 3.: First holder-arm
- 4.: Second holder-arm
- 5.: Attachment means to the holder-arms
- 6.: First connection part
- 7.: Through-hole for the first connection part
- 8.: Distance piece of second connection part
- 9.: Angle piece on second connection part
- 10.: Through-hole for the holder-arms
- 11.: Holder-part
- 12.: Milling to the main arm
- 13.: Fastening means to holder-part
- 14.: Finger-knob
- 15.: Pressure part of first connection part
- 16.: Side view-mirror
- 17.: Towing mirror
- 18.: Connection block
- 19.: Pointed screw
- 20.: Top-part
- 21.: Screw
- 22.: Assembly-part
- 23.: Portion of holder-part

## Claims

1. Towing mirror-holder (1) suitable for fitting onto a side-view mirror (16) of a car wherein said towing mirror-holder (1) comprises a main arm (2) and two holder-arms (3, 4, ) for engaging the side-view mirror (16) and holding the towing mirror-holder (1) onto it,
**characterized in that**
said two holder-arms (3, 4) are displaceable in relation to each other from opposite sides of the main arm (2) by allowing parts of the holder-arms to pass each other in parallel.

2. Towing mirror-holder (1) according to claim 1, wherein said main arm comprises a through-hole (10) for said holder-arms and wherein the holder-arms can be locked to the main arm with a pointed screw (21) suitable for being screwed into the main arm.

3. Towing mirror-holder (1) according to any of the preceding claims, wherein at least one of the holder-arms can be rotated around an axis extending axial along that part of said at least one holder-arm that passes through said through-hole of the main arm.

4. Towing mirror-holder (1) according to any of the preceding claims, wherein said main arm comprises at least two parts, of which a first part (2) is of a substantially constant cross-section and a second part (11) of a larger cross-section and arranged at a distal end of the first part (2), the second part being a holder-part suitable for retaining the holder-arms (3, 4).

5. Towing mirror-holder (1) according to any of the preceding claims, wherein said holder-arms are locked in position in relation to the main arm by attachment means (5).

6. Towing mirror-holder (1) according to any of the preceding claims, wherein the holder-arms are separately locked in position in relation to the main arm, by separate attachment means.

7. Towing mirror-holder (1) according to any of the preceding claims, wherein said attachment means comprises at least one screw.

## Patentansprüche

1. Anhängerspiegelhalter (1), der dafür geeignet ist, an einem Seitenspiegel (16) eines Fahrzeugs angebracht zu werden, wobei der Anhängerspiegelhalter (1) einen Hauptarm (2) und zwei Halterarme (3, 4) umfasst, um am Seitenspiegel (16) einzugreifen und den Anhängerspiegelhalter (1) auf ihm zu halten,
**dadurch gekennzeichnet, dass**
die beiden Halterarme (3, 4) von entgegengesetzten Seiten des Hauptarms (2) aus relativ zueinander verschiebbar sind, indem es ermöglicht wird, dass Abschnitte der Halterarme parallel aneinander vorbeigeführt werden.

2. Anhängerspiegelhalter (1) nach Anspruch 1, wobei der Hauptarm eine Durchgangsbohrung (10) für die Halterarme umfasst und wobei die Halterarme am Hauptarm mit einer zugespitzten Schraube (21) arretiert werden können, die dafür geeignet ist, in den Hauptarm geschraubt zu werden.

3. Anhängerspiegelhalter (1) nach einem der vorhergehenden Ansprüche, wobei wenigstens einer der Halterarme um eine Achse gedreht werden kann, die sich axial entlang des Teils des wenigstens einen Halterarms erstreckt, das durch die Durchgangsbohrung des Hauptarms geführt ist.

4. Anhängerspiegelhalter (1) nach einem der vorhergehenden Ansprüche, wobei der Hauptarm wenigstens zwei Teile umfasst, von denen ein erstes Teil (2) einen im Wesentlichen konstanten Querschnitt hat und ein zweites Teil (11) einen größeren Querschnitt hat und an einem distal liegenden Ende des ersten Teils (2) angeordnet ist, wobei das zweite Teil ein Halterteil ist, das dafür geeignet ist, die Halterarme (3, 4) festzuhalten.

5. Anhängerspiegelhalter (1) nach einem der vorhergehenden Ansprüche, wobei die Halterarme durch Befestigungsmittel (5) in ihrer Position relativ zum Hauptarm arretiert sind.

6. Anhängerspiegelhalter (1) nach einem der vorhergehenden Ansprüche, wobei die Halterarme durch getrennte Befestigungsmittel in ihrer Position relativ zum Hauptarm getrennt arretiert sind.

7. Anhängerspiegelhalter (1) nach einem der vorhergehenden Ansprüche, wobei die Befestigungsmittel wenigstens eine Schraube umfassen.

## Revendications

1. Support de miroir pour véhicules tracteurs (1) approprié pour s'adapter sur un rétroviseur latéral (16) d'un véhicule dans lequel ledit support de miroir pour véhicules tracteurs (1) comprend un bras principal (2) et deux bras de support (3, 4) pour être en prise avec le rétroviseur latéral (16) et maintenir le support de miroir pour véhicules tracteurs (1) sur lui,
**caractérisé en ce que**
lesdits deux bras de support (3, 4) sont déplaçables dans une relation l'un par rapport à l'autre à partir des côtés opposés du bras principal (2) en permettant aux parties des bras de support de passer parallèlement l'un à l'autre.

2. Support de miroir pour véhicules tracteurs (1) selon la revendication 1, dans lequel ledit bras principal comprend un trou traversant (10) pour lesdits bras de support et dans lequel les bras de support peuvent être verrouillés sur le bras principal avec une vis pointeau (21) appropriée pour être vissée dans le bras principal.

3. Support de miroir pour véhicules tracteurs (1) selon l'une quelconque des revendications précédentes, dans lequel au moins un des bras de support peut être tourné autour d'un axe s'étendant axialement le long de cette partie dudit au moins un bras de support qui traverse ledit trou traversant du bras principal.

4. Support de miroir pour véhicules tracteurs (1) selon l'une quelconque des revendications précédentes, dans lequel le bras principal comprend au moins deux parties, dont une première partie (2) est une section transversale essentiellement constante et une seconde partie (11) d'une section transversale plus grande et disposée à une extrémité distale de la première partie (2), la seconde partie étant une partie de support appropriée pour maintenir les bras de support (3, 4).

5. Support de miroir pour véhicules tracteurs (1) selon l'une quelconque des revendications précédentes, dans lequel lesdits bras de support sont verrouillés en position par rapport au bras principal par un moyen de fixation (5).

6. Support de miroir pour véhicules tracteurs (1) selon l'une quelconque des revendications précédentes, dans lequel les bras de support sont verrouillés séparément, en position par rapport au bras principal, par un moyen de fixation séparé.

7. Support de miroir pour véhicules tracteurs (1) selon l'une quelconque des revendications précédentes, dans lequel ledit moyen de fixation comprend au moins une vis.
